# EUROPEAN PATENT APPLICATION

(11) **EP 2 688 012 A1**
(43) Date of publication of application: **22.01.2014**
(21) Application number: 13172297.7
(22) Date of filing: 17.06.2013
(51) Int. Cl.: G06Q 10/00, G06Q 30/00

(54) **Smart apparatus, pairing system and method using the same**

(30) Priority: 16.07.2012 KR 20120077252
(71) Applicant: Samsung Electronics Co., Ltd, Gyeonggi-do 443-742 (KR)
(72) Inventor: Lee, Kwang Hyeon, Seoul (KR); Kim, Do Young, Gyeonggi-do (KR); Kim, Dong Woo, Gyeonggi-do (KR); Kim, Ji Eun, Gyeonggi-do (KR); Kim, Han Shin, Gyeonggi-do (KR); Park, Jeong Je, Gyeonggi-do (KR); Lim, Nae Hyun, Seoul (KR); Chang, Yong, Gyeonggi-do (KR)
(74) Representative: Land, Addick Adrianus Gosling

(57) **Abstract**

A smart apparatus for storing pairing information of an accessory and automatically performing pairing with the accessory if the accessory is operated, a pairing system using the smart apparatus, and a pairing method thereof includes a purchase module for receiving a purchase order for an accessory, and a pairing module for receiving product information including pairing information of the accessory if the purchase order for the accessory is received, and automatically performing pairing with the accessory using the pairing information of the accessory.

## Description

The following description relates to a smart apparatus with an application for enabling a user to purchase an accessory required for performing the function of the application, and a method and system for pairing the smart apparatus with the accessory.

Recently, smart apparatuses, such as smart phones or tablet PCs, have been widely used. The popularization of such smart apparatuses mainly results from development of various applications and users' demands for the applications.

The popularization of smart apparatuses and development of various applications bring new opportunities for combining smart apparatuses and applications with healthcare, in line with the recent trend in which life expectancy had improved steadily due to development of medical technology and, accordingly, interest in healthy life is increasing than ever before.

Such opportunities have resulted in the development of various kinds of healthcare applications for managing users' health with various methods.

The applications process, record, and store information transmitted from various kinds of accessories for healthcare, such as a blood pressure meter or a blood glucose meter, through pairing of the accessories with smart apparatuses, to thus monitor users' changes in health state.

However, although some users may have an aptitude for accepting and using new technologies, other users who are unfamiliar with smart apparatuses may have great difficulties in pairing a smart apparatus with an accessory.

Also, because some accessories do not support applications being used by a user, when he or she wants to purchase an accessory supporting a specific application, the user should search for and memorize the product name or serial number of the accessory to purchase the accessory at an on-line or off-line store.

That is, due to difficulties in the use of smart apparatuses and applications, some users may be excluded from the recent trend of healthcare through smart apparatuses and applications, although they have a greater need for healthcare.

Accordingly, a method for enabling a user to easily purchase an accessory supporting an application and conveniently pair the accessory with a smart apparatus so that everybody can easily use various applications is needed.

Therefore, it is an aspect of the present disclosure to provide a pairing system and method for automatically pairing an accessory with a smart apparatus when the accessory is operated by storing pairing information of the accessory.

Additional aspects of the invention will be set forth in part in the description which follows and, in part, will be obvious from the description, or may be learned by practice of the invention.

In accordance with an aspect of the present disclosure, a smart apparatus includes: a purchase module configured to receive a purchase order for an accessory; and a pairing module configured to receive, if the purchase order for the accessory is received, product information including pairing information of the accessory, and to be automatically paired with the accessory using the pairing information of the accessory.

The purchase module and the pairing module may be implemented through an application installed in the smart apparatus.

The accessory may support the application and be able to be paired with the smart apparatus.

The accessory may include a biometric signal measurement sensor or a peripheral device of the smart apparatus.

If the purchase order for the accessory is received, the pairing module may request a server to send product information about the accessory, receive the product information including the pairing information of the accessory from the server, and store the product information.

If the purchase order for the accessory is received, the pairing module may be automatically paired with the accessory, using the product information including the pairing information of the accessory and stored in the smart apparatus.

If the accessory is operated, the pairing module may request the accessory to perform pairing using the pairing information of the accessory to thereby be automatically paired with the accessory.

If the accessory is operated, the pairing module may receive a pairing request transmitted from the accessory, and be automatically paired with the accessory using the pairing information of the accessory, in response to the pairing request.

The pairing may be performed by Bluetooth or near field communication (NFC).

In accordance with an aspect of the present disclosure, a smart apparatus includes: an information receiving module configured to receive, if an accessory is purchased, product information including pairing information of the accessory; and a pairing module configured to be automatically paired with the accessory using the pairing information of the accessory if the product information is received.

If the accessory is purchased, the information receiving module may receive an application which is paired with the accessory to enable a user to use the accessory.

The accessory may support the application and be able to be paired with the smart apparatus.

The smart apparatus may further include a purchase module configured to receive a purchase order for the accessory.

The accessory may include a biometric signal measurement sensor or a peripheral device of the smart apparatus.

If the accessory is operated, the pairing module may request the accessory to perform pairing using the pairing information of the accessory to thereby be automatically paired with the accessory.

If the accessory is operated, the pairing module may receive a pairing request transmitted from the accessory, and be automatically paired with the accessory using the pairing information of the accessory, in response to the pairing request.

The pairing may be performed by Bluetooth or NFC.

In accordance with an aspect of the present disclosure, a pairing system includes: a smart apparatus; and an accessory configured to be paired with the smart apparatus and to transmit measured information to the smart apparatus, wherein if the accessory is purchased, the smart apparatus receives product information including pairing information of the accessory, and if the accessory is operated, the smart apparatus is automatically paired with the accessory using the pairing information of the accessory.

The smart apparatus may include an application for purchasing the accessory.

If the accessory is purchased through the application, the smart apparatus may receive the product information including the pairing information of the accessory, and if the accessory is operated, the smart apparatus may be automatically paired with the accessory using the pairing information of the accessory.

The application may include a purchase module configured to support the application and to provide a purchase environment in which an accessory capable of being paired with the smart apparatus is able to be purchased.

The application may record a current use state of the accessory, monitor a replacement time of a replaceable component among components of the accessory, and inform a user of the replacement time.

If a purchase order of the accessory is given through the application, the smart apparatus may check delivery information about the accessory, and update the delivery information.

If the accessory is purchased, the smart apparatus may be automatically paired with the accessory, using the product information including the pairing information of the accessory and stored in the smart apparatus.

The pairing system may further include a server in which product information including pairing information of purchasable accessories is stored.

If the accessory is purchased, the smart apparatus may receive the product information including the pairing information of the accessory from the server, and if the accessory is operated, the smart apparatus may be automatically paired with the accessory using the pairing information of the accessory.

The server may include a product database configured to store product information including pairing information of accessories according to the kinds of smart apparatuses that are able to be paired with the accessories; and an order database configured to store, if a purchase order for an accessory is given through the application, product information about the accessory, and to update and store delivery information about the accessory.

If the accessory is operated, the smart apparatus may request the accessory to perform pairing using the pairing information of the accessory to thereby be automatically paired with the accessory.

If the accessory is operated, the accessory may request the smart apparatus to perform pairing, and the smart apparatus may be automatically paired with the accessory using pairing information of the accessory, in response to the pairing request from the accessory.

If the accessory is operated, the accessory may request the smart apparatus to perform pairing, and the smart apparatus may check a pairing history about the accessory in response to the pairing request from the accessory, request the server to send pairing information required for pairing with the accessory if there is no pairing history about the accessory, and receive the pairing information of the accessory from the server to thereby be automatically paired with the accessory using the received pairing information of the accessory.

The pairing may be performed by Bluetooth or NFC.

In accordance with an aspect of the present disclosure, a pairing method includes: at a smart apparatus, monitoring whether an accessory is purchased through an application; at the smart apparatus, receiving product information including pairing information of the accessory if the accessory is purchased; and at the smart apparatus, automatically performing pairing with the accessory using the pairing information of the accessory if the accessory is operated.

The monitoring of whether the accessory is purchased through the application may include: at the smart apparatus, providing an interface for allowing a user to purchase the accessory through the application; and at the smart apparatus, monitoring whether a purchase order for purchasing the accessory is given through the interface.

The accessory may support the application, and be able to be paired with the smart apparatus.

The accessory may include a biometric signal measurement sensor or a peripheral device of the smart apparatus.

The receiving of the product information including the pairing information of the accessory if the accessory is purchased may include: at the smart apparatus, requesting a server to send product information about the accessory if a purchase order for purchasing the accessory is given; at the server, searching for product information including pairing information of the accessory and transmitting the found product information to the smart apparatus; and at the smart apparatus, receiving the product information transmitted from the server and storing the product information.

The automatically performing of pairing with the accessory using the pairing information of the accessory if the accessory is operated, may include, at the smart apparatus, requesting the accessory to perform pairing using the pairing information of the accessory if the accessory is operated, to thereby be automatically paired with the accessory.

The automatically performing of pairing with the accessory using the pairing information of the accessory if the accessory is operated, may include: at the accessory, requesting the smart apparatus to perform pairing if the accessory is operated; and at the smart apparatus, automatically performing pairing with the accessory using the pairing information of the accessory, in response to the pairing request from the accessory.

The pairing may be performed by Bluetooth or NFC.

In accordance with an aspect of the present disclosure, a pairing method includes: at an accessory, requesting a smart apparatus to perform pairing if the accessory is operated, and at the smart apparatus, requesting a server to send information required for pairing with the accessory; and at the smart apparatus, receiving pairing information of the accessory, transmitted from a server, and automatically performing pairing with the accessory using the pairing information of the accessory.

The requesting of the server to send information required for pairing with the accessory may include: at the smart apparatus, checking whether there is a pairing history about the accessory; and at the smart apparatus, requesting the server to send information required for pairing with the accessory if there is no pairing history about the accessory.

The accessory may support the application, and be able to be paired with the smart apparatus.

The accessory may include a biometric sensor and a peripheral device of the smart apparatus.

According to an aspect of the present disclosure, a user can conveniently purchase an accessory supporting his or her smart apparatus and a desired application by directly purchasing the accessory through the application.

Also, when the user uses the application by using the accessory with the smart apparatus, the accessory may be automatically paired with the smart apparatus so that the user has no difficulties in pairing the smart apparatus with the accessory.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a conceptual view showing a pairing system in accordance with an embodiment of the present disclosure;
FIG. 2 is a block diagram showing the configuration of the pairing system of FIG. 1;
FIG. 3 schematically shows a purchase interface provided by an application installed in a smart apparatus in accordance with an embodiment of the present disclosure;
FIG. 4 is a conceptual view showing purchasing, delivery, and pairing of an accessory using a pairing system in accordance with an embodiment of the present disclosure;
FIG. 5 is a conceptual view showing a pairing system in accordance with an embodiment of the present disclosure;
FIG. 6 is a flowchart showing a pairing method for pairing an accessory with a smart apparatus, in accordance with an embodiment of the present disclosure; and
FIG. 7 is a flowchart showing a pairing method for pairing an accessory with a smart apparatus, in accordance with an embodiment of the present disclosure.

### DETAILED DESCRIPTION

Reference will now be made in detail to the embodiments of the present disclosure, examples of which are illustrated in the accompanying drawings, wherein like reference numerals refer to like elements throughout.

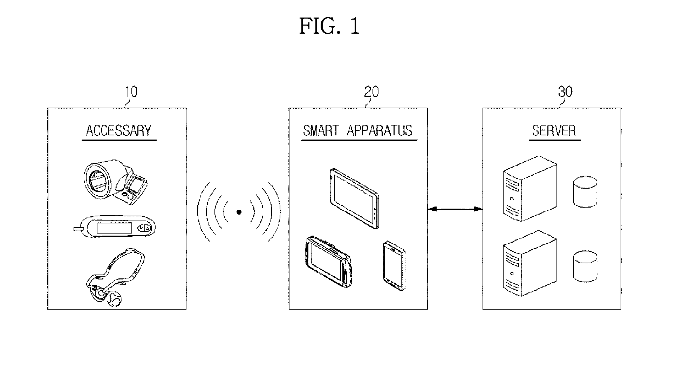

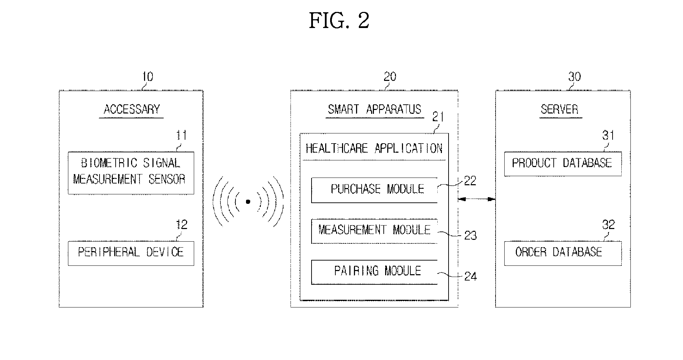

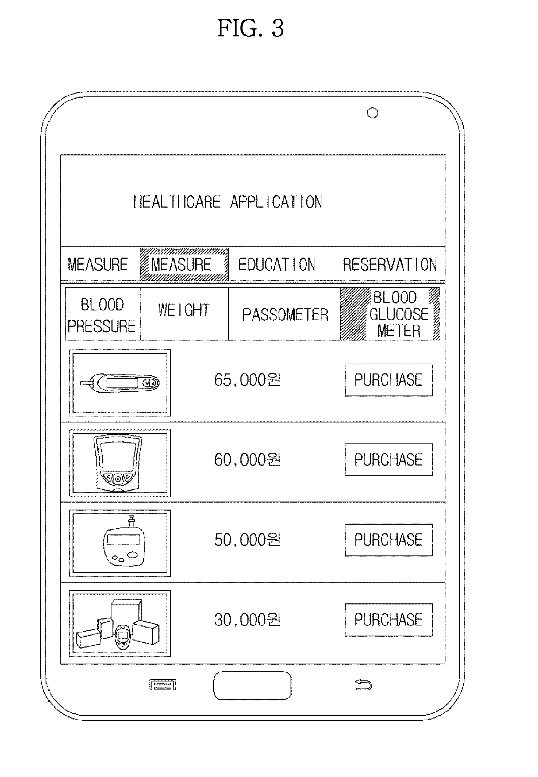

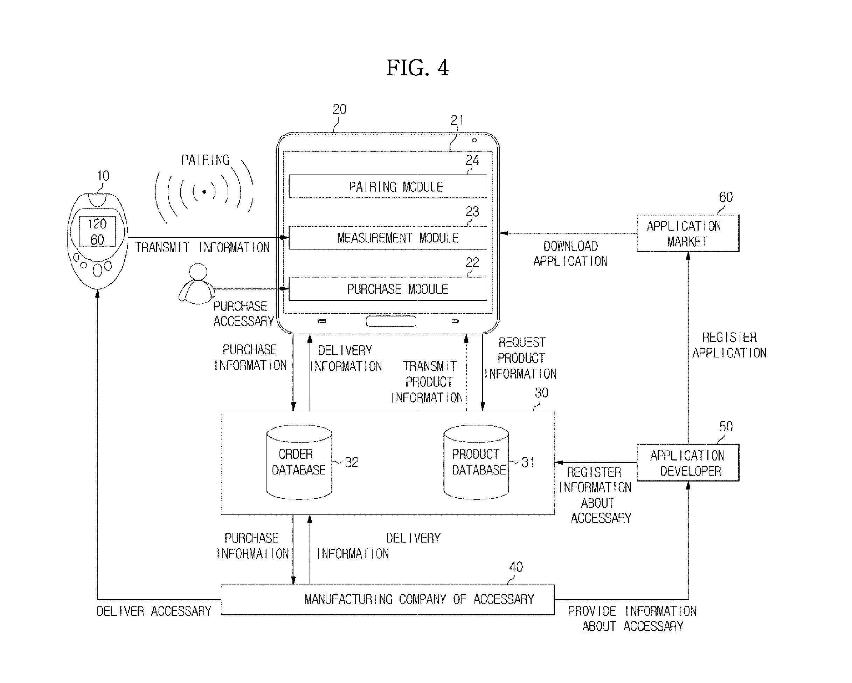

FIG. 1 is a conceptual view showing a pairing system in accordance with an embodiment of the present disclosure, FIG. 2 is a block diagram showing the configuration of the pairing system of FIG. 1, FIG. 3 schematically shows a purchase module provided by an application installed in a smart apparatus in accordance with an embodiment of the present disclosure, and FIG. 4 is a conceptual view showing operations for purchasing, delivery, and pairing of an accessory 10 using a pairing system in accordance with an embodiment of the present disclosure.

The pairing system in accordance with an embodiment of the present disclosure includes a smart apparatus 20, a server 30, and the accessory 10.

The smart apparatus 20 may be a smart phone, a tablet PC, or a medical gateway used for a remote medical service such as U-healthcare, for example.

The gateway may be a type integrated with a display, a set-top box type including an IPTV or a cable TV, a smart phone type, a Wibro terminal type, a Wi-Fi wireless router type, a PC type including a tablet PC, or a type integrated with medical equipment, for example.

The smart apparatus 20 may install an application 21 for healthcare therein.

The application 21 for healthcare may include various kinds of applications for various purposes. However, the application 21 installed in the smart apparatus 20 of the pairing system in accordance with an embodiment provides the following functions.

The application 21 for healthcare includes a purchase module 22 for providing a purchase environment in which a user can purchase the accessory 10 required for the user to use the function of the application 21, a pairing module 24 for providing an environment in which the accessory 10 interfaces with the smart apparatus 20 for information transmission and reception between the accessory 10 and the smart apparatus 20, and a measurement module 23 for processing, recording, and storing information transmitted from the accessory 10.

FIG. 3 shows an example of the purchase module 22 provided by the application 21.

As shown in FIG. 3, the purchase module 22 may be configured with a product list including buttons prepared for allowing a user to select the kind of the accessory 10, specifically, the kind of a biometric signal measurement sensor 11, and purchase buttons prepared for allowing the user to give a purchase order for the biometric signal measurement sensor 11 when the image and price of the biometric signal measurement sensor 11 is displayed. However, the purchase module 22 shown in FIG. 3 is only an example, and the purchase module 22 may have a different interface configuration.

In the case of a conventional healthcare application, if a user selects a product through the application in order to purchase the product through the application, the user is connected to a website in which the corresponding product is actually sold. That is, the user should move to another web browser to purchase a desired product, instead of directly purchasing the product in an application.

Because most smart apparatuses have been designed to be suitable for a mobile environment, it is not easy to purchase products through a smart apparatus on a website having no mobile dedicated website. Also, even when a user connects to a new web browser and purchases a desired product on the web browser, the purchased product may be useless if it neither works with the user's smart apparatus nor supports the corresponding application.

Accordingly, as shown in FIG. 3, the healthcare application 21 includes the purchase module 22 for providing a purchase environment in which a user can directly purchase the accessory 10 capable of being paired with the smart apparatus 20 having the application 21 installed therein and supporting the application 21, in the application 21, without having to move to another web browser.

The accessory 10 that is provided by the purchase module 22 is an accessory authenticated as an accessory supporting the application 21 by an application developer 50 through a compatibility test with respect to the application 21.

Product information about such accessories is registered in product database 31 of the server 30.

The product information about accessories registered in the product database 31 is classified and stored according to the kinds of smart apparatuses because the respective accessories may support different kinds of smart apparatuses.

That is, a list of accessories classified according to the kinds of smart apparatuses on the market is stored.

Here, the product information about accessories may include the product names, serial numbers, pairing information, and prices of the accessories.

If a purchase order for the accessory 10 is given through the purchase module 22, the purchase module 22 requests the product database 31 of the server 30 to send product information about the accessory 10, receives the product information about the accessory 10 from the server 30, and stores the product information about the accessory 10.

Also, the purchase module 22 transmits the corresponding order information to order database 32 of the server 30, and if the accessory 10 has been delivered, the purchase module 22 receives updated delivery information from the order database 32 of the server 30, and informs the user of the current state of delivery.

The pairing module 24 is used to pair the accessory 10 with the smart apparatus 20.

The pairing module 24 requests the accessory 10 to perform pairing using the product information including pairing information of the accessory 10 when the accessory 10 is operated, without requiring the user's manipulation for pairing of the accessory 10 with the smart apparatus 20, so that the accessory 10 is automatically paired with the smart apparatus 20.

That is, by causing the pairing module 24 to automatically request the accessory 10 to perform pairing, using the product information including the pairing information of the accessory 10, received from the product database 31 and stored, so that the accessory 10 performs pairing, people who are unfamiliar with the operation of the smart apparatus 20 can easily pair the accessory 10 with the smart apparatus 20.

Before using the pairing information of the accessory 10, received from the product database 31 and stored, the pairing module 24 may check the memory of the smart apparatus 20, and use the pairing information of the accessory 10 stored in the memory if the pairing information of the accessory 10 is stored in the memory of the smart apparatus 20.

As described above, when the smart apparatus 20 functions as a master and the accessory 10 functions as a slave, the smart apparatus 20 requests the accessory to perform pairing, however, it is also possible that the accessory 10 functions as a master and the smart apparatus 20 functions as a slave such that the smart apparatus 20 is paired with the accessory 10.

That is, if the accessory 10 is operated, the accessory 10 may request the smart apparatus 20 to perform pairing, and then the smart apparatus 20 may be paired with the accessory 10 using pairing information of the accessory 10, in response to the pairing request from the accessory 10.

The user may arbitrarily select one of the smart apparatus 20 and the accessory 10 to easily pair the smart apparatus 20 with the accessory 10.

In order for the user to easily request pairing when the accessory 10 functions as a master to request the smart apparatus 20 to perform pairing, the accessory 10 may include an input button such as a pairing button.

If the accessory 10 is an accessory which the user already possesses, rather than an accessory delivered according to a purchase order given through the application 21 installed in the smart apparatus 20, the smart apparatus 20 checks whether there is a pairing history about the corresponding accessory 10 when receiving a pairing request from the accessory 10.

If there is no pairing history about the accessory 10, the smart apparatus 20 requests the server 30 to send information required for pairing with the accessory 10 through the pairing module 24 of the application 21.

If the server 30 stores product information about the corresponding accessory 10, the server 30 transmits the product information about the accessory 10 to the smart apparatus 20, and the smart apparatus 20 performs pairing with the accessory 10 using pairing information included in the product information.

That is, if the accessory 10 has been registered in the server 30 although the accessory 10 has never been purchased through the application 21 of the smart phone 20, the smart apparatus 20 can check the server 30 and receive pairing information of the accessory 10 from the server 30 to thus be easily paired with the accessory 10.

Pairing between the accessory 10 and the smart apparatus 20 may be performed by various well-known communication methods. For example, pairing between the accessory 10 and the smart apparatus 20 may be performed by Bluetooth or near field communication (NFC).

The measurement module 23 receives information acquired from the accessory 10 such as the biometric signal measurement sensor 11, and converts the information to the user's desired information such as the user's changes in health state, for example, and displays the user's desired information.

For example, the measurement module 23 may convert the received information to a graph or table showing the user's changes in health state and display the graph or table so that the user can intuitively recognize his or her changes in health state.

Also, the measurement module 23 may store information received from the accessory 10 to database a history about the user's health state.

The server 30 includes the product database 31 and the order database 32, wherein the product database 31 classifies and stores product information including pairing information of accessories according to the kinds of smart apparatuses capable of being paired with the respective accessories, and the order database 32 stores, if a purchase order for the accessory 10 is given through the application 21, product information about the ordered accessory 10, and updates and stores delivery information of the ordered accessory 10.

Product information registered in the product database of the server 30 is product information about accessories authenticated as accessories supporting the application 21 by an application developer 50 through a compatibility test with respect to the application 21.

The product information about accessories registered in the product database 31 is classified and stored according to the kinds of smart apparatuses because the respective accessories may support different kinds of smart apparatuses.

Here, the product information about accessories may include the product names, serial numbers, pairing information, and prices of the accessories.

If a purchase order for the accessory 10 is given through the application 21 of the smart apparatus 20, the application 21 may request the product database 31 of the server 30 to send product information about the ordered accessory 10.

The product database 31 of the server 30 searches for product information about the corresponding accessory 10 in response to the product information request from the application 21, and transmits the found product information to the smart apparatus 20.

If the accessory 10 is an accessory which the user possesses, not an accessory that has been purchased through the application 21 installed in the smart apparatus 20, and no pairing history about the corresponding accessory 10 exists in the smart apparatus 20, the smart apparatus 20 requests the server 30 to send information needed for pairing with the accessory 10.

The product database 31 of the server 30 searches for product information about the corresponding accessory 10 in response to the request from the smart apparatus 20, and if there is product information about the accessory 10, the product database 31 transmits the found product information to the smart apparatus 20.

If the purchase order for the accessory 10 is given through the application 21 of the smart apparatus 20, the order information is transmitted to the order database 32 of the server 30.

The order database 32 stores the order information, and transmits the order information to the manufacturing company 40 of the accessory 10 so that the ordered accessory 10 can be delivered.

Also, if the accessory 10 has been delivered, the order database 32 receives and updates delivery information of the accessory 10 from the manufacturing company of the accessory 10, and transmits the delivery information to the smart apparatus 20 so that the user can check a current state of delivery of the ordered accessory 10.

The accessory 10 includes devices capable of working with a smart apparatus and transmitting and receiving information to and from the smart apparatus to thereby expand the functionality of the smart apparatus.

The accessory 10 may be one of various kinds of accessories including accessories for performing the unique functions of the smart apparatus 20 and accessories for executing the functions of applications installed in the smart apparatus 20.

For example, the accessory 10 may be a peripheral device 12, such as a Bluetooth headset, wirelessly paired with the smart apparatus 20 for expanding the audio function of the smart apparatus 20, or the biometric signal measurement sensor 11, such as a blood pressure meter or a blood glucose meter, for measuring a user's biometric information and transmitting the measured information to the smart apparatus 20 in order to use the various functions of the healthcare application 21 installed in the smart apparatus 20.

Pairing between the accessory 10 and the smart apparatus 20 may be performed by various well-known communication methods. For example, pairing between the accessory 10 and the smart apparatus 20 may be performed by Bluetooth or NFC.

Hereinafter, an example in which the biometric signal measurement apparatus 11 is used as the accessory 10 will be described.

The accessory 10 that is provided by the purchase module 22 of the healthcare application 21 of the smart apparatus 20 is an accessory authenticated as an accessory supporting the application by the application developer 50 through a compatibility test with respect to the application 21.

The production information about the accessory 10 has been registered in the product database 31 of the server 30.

The product information about accessories registered in the product database 31 is classified and stored according to the kinds of smart apparatuses because the respective accessories may support different kinds of smart apparatuses.

Here, the product information about accessories may include the product names, serial numbers, pairing information, and prices of the accessories.

The accessory 10 and the smart apparatus 20 may be paired through the pairing module 24 of the application 21.

The pairing module 24 requests the accessory 10 to perform pairing using the product information including pairing information of the accessory 10 when the accessory 10 is operated, without requiring the user's manipulation for pairing of the accessory 10 with the smart apparatus 20, so that the accessory 10 is automatically paired with the smart apparatus 20.

That is, by causing a pairing interface to automatically request the accessory 10 to perform pairing, using the product information including the pairing information of the accessory 10, received from the product database 31 and stored, so that the accessory 10 performs pairing, the people who are unfamiliar with the smart apparatus 20 can easily pair the accessory 10 with the smart apparatus 20.

As described above, when the smart apparatus 20 functions as a master and the accessory 10 functions as a slave, the smart apparatus 20 requests the accessory 10 to perform pairing, however, it is also possible that the accessory 10 functions as a master and the smart apparatus 20 functions as a slave such that the smart apparatus 20 is paired with the accessory 10.

That is, if the accessory 10 is operated, the accessory 10 may request the smart apparatus 20 to perform pairing, and then the smart apparatus 20 may be paired with the accessory 10 using pairing information of the accessory 10, in response to the pairing request from the accessory 10.

The user may arbitrarily select one of the smart apparatus 20 and the accessory 10 to easily pair the smart apparatus 20 with the accessory 10.

If the accessory 10 is an accessory which the user already possesses, rather than an accessory delivered according to a purchase order given through the application 21 installed in the smart apparatus 20, the smart apparatus 20 checks whether there is a pairing history about the corresponding accessory 10 when receiving a pairing request from the accessory 10.

If there is no pairing history about the accessory 10, the smart apparatus 20 requests the server 30 to send information required for pairing with the accessory 10 through the pairing module 24 of the application 21.

If the server 30 stores product information about the corresponding accessory 10, the server 30 transmits the product information about the accessory 10 to the smart apparatus 20, and the smart apparatus 20 performs pairing with the accessory 10 using pairing information included in the product information.

That is, if the accessory 10 has been registered in the server 30 although the accessory 10 has never been purchased through the application 21 of the smart phone 20, the smart apparatus 20 can check the server 30 and receive pairing information of the accessory 10 from the server 30 to thus be easily paired with the accessory 10.

Referring to FIG. 4, the healthcare application 21 installed in the smart apparatus 20 has been developed by the application developer 50 and registered on an application market 60, and the user of the smart apparatus 20 may download the corresponding application 21 from the commercialized application market 60 to install the application 21 in the smart apparatus 20.

As described above, the application 21 may include the purchase module 22 for providing a purchase environment in which a user can purchase the accessory 10 required for the user to use the function of the application 21, the pairing module 24 for providing an environment in which the accessory 10 interfaces with the smart apparatus 20 for information transmission and reception between the accessory 10 and the smart apparatus 20, and the measurement module 23 for processing, recording, and storing information transmitted from the accessory 10.

The accessory 10 that is provided by the purchase module 22 of the application 21 is an accessory authenticated as an accessory supporting the application 21 by the application developer 50 through a compatibility test with respect to the application 21.

The production information about the accessory 10 has been registered in the product database 31 of the server 30.

The product information about accessories registered in the product database 31 is classified and stored according to the kinds of smart apparatuses because the respective accessories may support different kinds of smart apparatuses.

That is, a list of accessories classified according to the kinds of smart apparatuses on the market is stored.

Here, the product information about accessories may include the product names, serial numbers, pairing information, and prices of the accessories.

If a purchase order for the accessory 10 is given through the application 21, the application 21 requests the product database 31 of the server 30 to send product information about the accessory 10, receives the product information about the accessory 10 from the server 30, and stores the product information about the accessory 10.

Also, if the purchase order for the accessory 10 is given through the application 21 of the smart apparatus 20, the order information is transmitted to the order database of the server 30.

The order database 32 stores the order information, and transmits the order information to the manufacturing company 40 of the accessory 10 so that the ordered accessory 10 can be delivered.

Also, if the accessory 10 has been delivered, the order database 32 receives and updates delivery information of the accessory 10 from the manufacturing company of the accessory 10, and transmits the delivery information to the smart apparatus 20 so that the user can check a current state of delivery of the ordered accessory 10.

The pairing module 24 of the application 21 is used to pair the accessory 10 with the smart apparatus 20.

The pairing module 24 requests the accessory 10 to perform pairing using the product information including the pairing information of the accessory 10 when the accessory 10 is operated, without requiring the user's manipulation for pairing of the accessory 10 with the smart apparatus 20, so that the accessory 10 is automatically paired with the smart apparatus 20.

If the accessory 10 is delivered and operated by the user, the pairing module 24 automatically requests the accessory 10 to perform pairing, using product information including pairing information of the accessory 10, received from the product database 31 and stored, so that the accessory 10 is paired with the smart apparatus 20. Thereby, the people who are unfamiliar with the smart apparatus 20 can easily pair the accessory 10 with the smart apparatus 20.

As described above, when the smart apparatus 20 functions as a master and the accessory 10 functions as a slave, the smart apparatus 20 requests the accessory 10 to perform pairing so that the accessory 10 performs pairing, however, it is also possible that the accessory 10 functions as a master and the smart apparatus 20 functions as a slave such that the smart apparatus 20 is paired with the accessory 10.

That is, if the accessory 10 is operated, the accessory 10 may request the smart apparatus 20 to perform pairing, and then the smart apparatus 20 may be paired with the accessory 10 using pairing information of the accessory 10, in response to the pairing request from the accessory 10.

The user may arbitrarily select one of the smart apparatus 20 and the accessory 10 to easily pair the smart apparatus 20 with the accessory 10.

In order for the user to easily request pairing when the accessory 10 functions as a master to request the smart apparatus 20 to perform pairing, the accessory 10 may include an input button such as a pairing button.

If the accessory 10 is an accessory which the user already possesses, rather than an accessory delivered according to a purchase order given through the application 21 installed in the smart apparatus 20, the smart apparatus 20 checks whether there is a pairing history about the corresponding accessory 10 when receiving a pairing request from the accessory 10.

If there is no pairing history about the accessory 10, the smart apparatus 20 requests the server 30 to send information required for pairing with the accessory 10 through the pairing module 24 of the application 21.

If the server 30 stores product information about the corresponding accessory 10, the server 30 transmits the product information about the accessory 10 to the smart apparatus 20, and the smart apparatus 20 performs pairing with the accessory 10 using pairing information included in the product information.

That is, if the accessory 10 has been registered in the server 30 although the accessory 10 has never been purchased through the application 21 of the smart phone 20, the smart apparatus 20 can check the server 30 and receive pairing information of the accessory 10 from the server 30 to thus be easily paired with the accessory 10.

Pairing between the accessory 10 and the smart apparatus 20 may be performed by various well-known communication methods. For example, pairing between the accessory 10 and the smart apparatus 20 may be performed by Bluetooth or NFC.

If the accessory 10 is paired with the smart apparatus 20, the measurement module 23 of the application 21 receives information acquired from the accessory 10 such as the biometric signal measurement sensor 11, and converts the information to the user's desired information such as the user's changes in health state, and displays the user's desired information.

For example, the measurement module 23 may convert the received information to a graph or table showing the user's changes in health state and display the graph or table so that the user can intuitively recognize his or her changes in health state.

Also, the measurement module 23 may store information received from the accessory 10 to database a history about the user's health state.

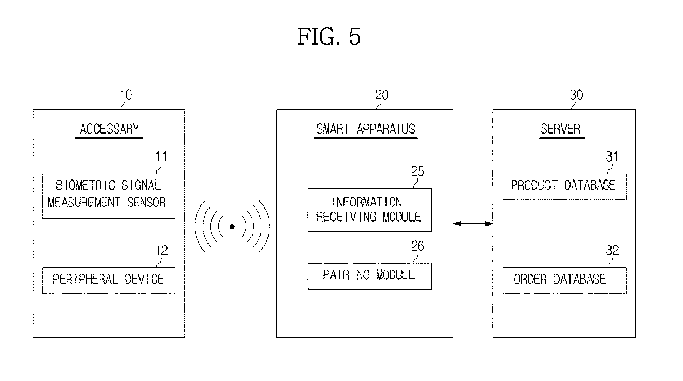

FIG. 5 is a block diagram view showing a pairing system in accordance with an embodiment of the present disclosure.

Referring to FIG. 5, the pairing system in accordance with an embodiment of the present disclosure includes a smart apparatus 20, a server 30, and an accessory 10.

Because the current embodiment has the same configuration as the above-described embodiment, except that the accessory 10 is purchased through another route, such as through an on-line store, for example, instead of through the smart apparatus 20, the following description will be given based on the difference between the current embodiment and the above-described embodiment.

The smart apparatus 20 may be a smart phone, a tablet PC, or a medical gateway used for a remote medical service such as U-healthcare. The gateway may be a type integrated with a display, a set-top box type including an IPTV or a cable TV, a smart phone type, a Wibro terminal type, a Wi-Fi wireless router type, a PC type including a tablet PC, a type integrated with medical equipment, etc.

The smart apparatus 20 includes an information receiving module 25 for receiving product information including pairing information of the accessory 10 when the smart apparatus 10 has been purchased through another route, instead of through the purchase module (22 of FIG. 2), and a pairing module 26 for automatically pairing with the accessory 10 using the pairing information included in the product information if the product information is received. Also, the smart apparatus 20 may include a purchase module (see the purchase module 22 of FIG. 2) for allowing a user to purchase the accessory 10 through the smart apparatus 20, wherein the purchase module may be implemented through an application or installed in the smart apparatus 20.

Because the current embodiment relates to the case in which the accessory 10 is purchased through another route, for example, through an on-line store, instead of through the smart apparatus 20, no purchase module is shown in the smart apparatus 20 of FIG. 5.

For example, if the accessory 10 has been purchased through an on-line store or the like, instead of through the smart apparatus 20, the information receiving module 25 of the smart apparatus 20 receives product information including pairing information of the accessory 10. At this time, the information receiving module 25 may receive the product information from the server 30, etc. that is managed by the on-line store through which the accessory 10 has been purchased. The server 30 may include a product database 31 and an order database 32, like the above-described embodiment.

Also, if the accessory 10 has been purchased, the information receiving module 25 may receive an application for enabling the user to use the accessory 10 by being paired with the accessory 10, together with the product information. The information receiving module 25 may receive the application from the server 30, or connect to a commercialized application market and receive the application through the application market. The application may be an application for healthcare.

The application for healthcare may be one of various kinds of applications for various purposes, or may be an application providing the same function as the application 21 installed in the smart apparatus 20 of the pairing system according to the embodiment described above.

The information receiving module 25 receives the product information and the application, the application is installed, and if the accessory 10 is operated, the pairing module 26 is paired with the accessory 10 using pairing information included in the product information.

Before using the pairing information of the accessory 10, received from the information receiving module 25, the pairing module 26 may check the memory of the smart apparatus 20, and use the pairing information of the accessory 10 stored in the memory if the pairing information of the accessory 10 is stored in the memory of the smart apparatus 20.

The pairing module 26 requests the accessory 10 to perform pairing using the product information including the pairing information of the accessory 10 when the accessory 10 is operated, without requiring the user's manipulation for pairing of the accessory 10 with the smart apparatus 20, so that the accessory 10 is automatically paired with the smart apparatus 20.

As described above, when the smart apparatus 20 functions as a master and the accessory 10 functions as a slave, the smart apparatus 20 requests the accessory 10 to perform pairing, however, it is also possible that the accessory 10 functions as a master and the smart apparatus 20 functions as a slave such that the smart apparatus 20 is paired with the accessory 10.

That is, if the accessory 10 is operated, the accessory 10 may request the smart apparatus 20 to perform pairing, and then the smart apparatus 20 may be paired with the accessory 10 using pairing information of the accessory 10, in response to the pairing request from the accessory 10.

The user may arbitrarily select one of the smart apparatus 20 and the accessory 10 to easily pair the smart apparatus 20 with the accessory 10.

In order for the user to easily request pairing when the accessory 10 functions as a master to request the smart apparatus 20 to perform pairing, the accessory 10 may include an input button such as a pairing button.

Pairing between the accessory 10 and the smart apparatus 20 may be performed by various well-known communication methods. For example, pairing between the accessory 10 and the smart apparatus 20 may be performed by Bluetooth or NFC.

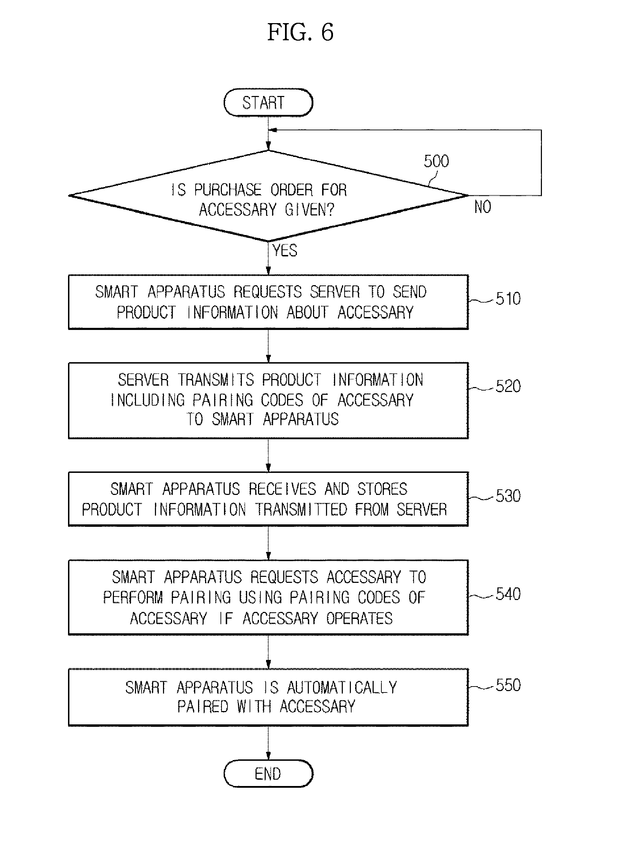

FIG. 6 is a flowchart showing a pairing method for pairing the accessory 10 with the smart apparatus 20, in accordance with an embodiment of the present disclosure.

Referring to FIGS. 4 and 6, the smart apparatus 20 monitors whether a purchase order for the accessory 10 is given through the application 21 (operation 500).

That is, the smart apparatus 20 monitors whether a purchase order for the accessory 10 provided by the purchase module 22 of the healthcare application 21 installed in the smart apparatus 20 is given.

The accessory 10 that is provided by the purchase module 22 of the application 21 is an accessory authenticated as an accessory supporting the application 21 by the application developer 50 through a compatibility test with respect to the application 21.

If a purchase order for the accessory 10 is given, the smart apparatus 20 requests the server 30 to send product information about the accessory 10 (operation 510), and the server 30 searches for the product information about the accessory 10 including pairing information of the accessory, and transmits the found product information about the accessory 10 to the smart apparatus 20 (operation 520). Then, the smart apparatus 20 receives the product information transmitted from the server 30, and stores the product information (operation 530).

The product information about the accessory 10 is registered in the product database 31 of the server 30.

The product information about accessories registered in the product database 31 is classified and stored according to the kinds of smart apparatuses because the respective accessories may support different kinds of smart apparatuses.

That is, a list of accessories classified according to the kinds of smart apparatuses on the market is stored.

Here, the product information about accessories may include the product names, serial numbers, pairing information, and prices of the accessories.

That is, if the accessory 10 is operated, the smart apparatus 20 may request the accessory 10 to perform pairing, using the pairing information of the accessory 10 (operation 540), so that the smart apparatus 20 is automatically paired with the accessory 10 (operation 550).

That is, when the smart apparatus 20 functions as a master and the accessory 10 functions as a slave, the smart apparatus 20 requests the accessory 10 to perform pairing so that the smart apparatus 20 is paired with the accessory 10.

The pairing module 24 of the application 21 installed in the smart apparatus 20 is used to pair the accessory 10 with the smart apparatus 20.

The pairing module 24 requests the accessory 10 to perform pairing using the product information including the pairing information of the accessory 10 when the accessory 10 is operated, without requiring the user's manipulation for pairing of the accessory 10 with the smart apparatus 20, so that the accessory 10 is automatically paired with the smart apparatus 20.

That is, by causing the pairing module 24 to automatically request the accessory 10 to perform pairing, using the product information including the pairing information of the accessory 10, received from the product database 31 and stored, so that the accessory 10 performs pairing, the people who are unfamiliar with the smart apparatus 20 can easily pair the accessory 10 with the smart apparatus 20.

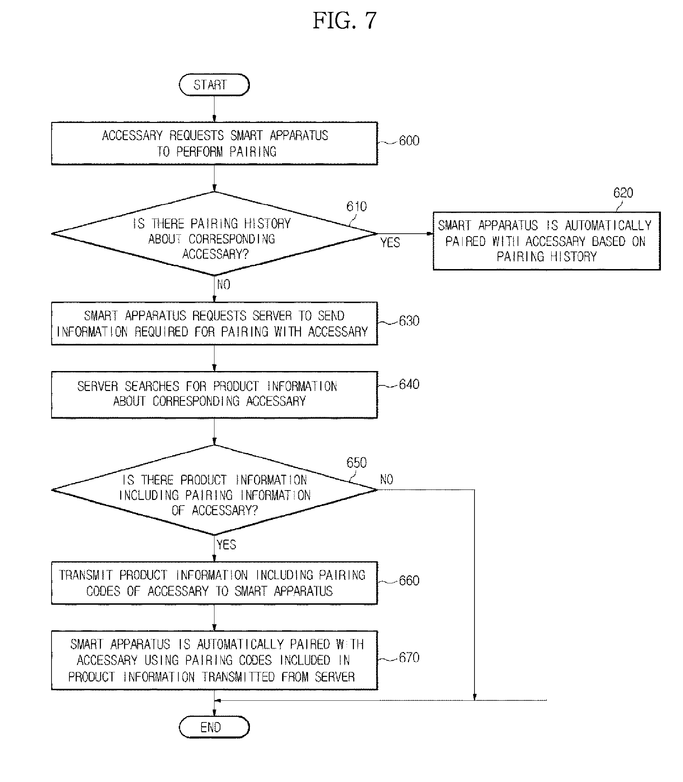

FIG. 7 is a flowchart showing a pairing method for pairing the accessory 10 with the smart apparatus 20, in accordance with an embodiment of the present disclosure.

Referring to FIGS. 4 and 7, if the accessory 10 is operated, the accessory 10 requests the smart apparatus 20 to perform pairing (operation 600). When the accessory 10 functions as a master and the smart apparatus 20 functions as a slave, the accessory 10 requests the smart apparatus 20 to perform pairing so that the accessory 10 is paired with the smart apparatus 20.

If the pairing request is received from the accessory 10, the smart apparatus 20 checks whether there is a pairing history about the corresponding accessory 10 (operation 610). If there is a pairing history about the accessory 10, the smart apparatus 20 is automatically paired with the accessory 10 based on the pairing history (operation 620), and if there is no pairing history about the accessory 10, the smart apparatus 20 requests the server 30 to send information required for pairing with the accessory 10 (operation 630).

The server 30 searches for product information about the accessory 10 (operation 640), checks whether there is product information including pairing information of the accessory 10 (operation 650), and transmits the found product information about the accessory 10 to the smart apparatus 20 if there is the product information about the accessory 10 (operation 660).

Then, the smart apparatus 20 is automatically paired with the accessory 10 using the pairing information included in the product information transmitted from the server 30 (operation 670).

That is, if the accessory 10 is operated, the accessory 10 requests the smart apparatus 20 to perform pairing, and then the smart apparatus 20 may be paired with the accessory 10 using pairing information of the accessory 10, in response to the pairing request from the accessory 10.

If the accessory 10 is an accessory which the user possesses, not an accessory delivered according to a purchase order given through the application 21 installed in the smart apparatus 20, the smart apparatus 20 checks whether there is a pairing history about the corresponding accessory 10 when receiving a pairing request from the accessory 10.

If there is no pairing history about the accessory 10, the smart apparatus 20 requests the server 30 to send information required for pairing with the accessory 10 through the pairing module 24 of the application 21.

If the server 30 stores product information about the corresponding accessory 10, the server 30 transmits the product information about the accessory 10 to the smart apparatus 20, and the smart apparatus 20 performs pairing with the accessory 10 using pairing information included in the product information.

That is, if the accessory 10 has been registered in the server 30 although the accessory 10 has never been purchased through the application 21 of the smart phone 20, the smart apparatus 20 can check the server 30 and receive pairing information of the accessory 10 from the server 30 to thus be easily paired with the accessory 10.

Pairing between the accessory 10 and the smart apparatus 20 may be performed by various well-known communication methods. For example, pairing between the accessory 10 and the smart apparatus 20 may be performed by Bluetooth or NFC.

The above-described embodiments may be recorded in computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. An apparatus comprising:
a purchase module configured to receive a purchase order for an accessory; and
a pairing module configured to receive, if the purchase order for the accessory is received, product information comprising pairing information of the accessory, and to be automatically paired with the accessory using the pairing information of the accessory.

2. The apparatus according to claim 1, wherein the purchase module and the pairing module are implemented through an application installed in the apparatus, and
wherein the accessory supports the application and is able to be paired with the apparatus.

3. The apparatus according to claim 1 or 2, wherein the accessory comprises at least one of a biometric signal measurement sensor and a peripheral device of the apparatus.

4. The apparatus according to claim 1, 2 or 3,
wherein if the purchase order for the accessory is received, the pairing module requests a server to send product information about the accessory, receives the product information comprising the pairing information of the accessory from the server, and stores the product information.

5. The apparatus according to any of claims 1-4,
wherein if the purchase order for the accessory is received, the pairing module is automatically paired with the accessory, using the product information comprising the pairing information of the accessory and stored in the apparatus.

6. The apparatus according to any of claims 1-5,
wherein if the accessory is operated, the pairing module requests the accessory to perform pairing using the pairing information of the accessory to thereby be automatically paired with the accessory.

7. The apparatus according to any of claims 1-6,
wherein if the accessory is operated, the pairing module receives a pairing request transmitted from the accessory, and is automatically paired with the accessory using the pairing information of the accessory, in response to the pairing request.

8. The apparatus according to any of claims 1-7,
wherein the pairing is performed by Bluetooth or near field communication (NFC).

9. A pairing method comprising:
monitoring, at an apparatus, whether an accessory is purchased through an application;
receiving, at the apparatus, product information comprising pairing information of the accessory if the accessory is purchased; and
automatically performing, at the apparatus, pairing with the accessory using the pairing information of the accessory if the accessory is operated.

10. The pairing method according to claim 9, wherein the monitoring of whether the accessory is purchased through the application comprises:
providing, at the apparatus, an interface for allowing a user to purchase the accessory through the application; and
monitoring, at the apparatus, whether a purchase order for purchasing the accessory is given through the interface.

11. The pairing method according to claim 9 or 10,
wherein the accessory supports the application, and is able to be paired with the apparatus.

12. The pairing method according to claim 11, wherein the accessory comprises a biometric signal measurement sensor or a peripheral device of the apparatus.

13. The pairing method according to any of claims 9-12, wherein the receiving of the product information comprising the pairing information of the accessory if the accessory is purchased comprises:
requesting, at the apparatus, a server to send product information about the accessory if a purchase order for purchasing the accessory is given;
searching, at the server, for product information comprising pairing information of the accessory and transmitting the found product information to the apparatus; and
receiving, at the apparatus, the product information transmitted from the server and storing the product information.

14. The pairing method according to any of claims 9-13, wherein the automatically performing of pairing with the accessory using the pairing information of the accessory if the accessory is operated, comprises, requesting, at the apparatus, the accessory to perform pairing using the pairing information of the accessory if the accessory is operated, to thereby be automatically paired with the accessory.

15. The pairing method according to any of claims 9-14, wherein the automatically performing of pairing with the accessory using the pairing information of the accessory if the accessory is operated, comprises:
requesting, at the accessory, the apparatus to perform pairing if the accessory is operated; and
automatically performing, at the apparatus, pairing with the accessory using the pairing information of the accessory, in response to the pairing request from the accessory.
